# EUROPÄISCHE PATENTSCHRIFT

(11) **EP 0 857 886 B1**
(45) Veröffentlichungstag und Bekanntmachung des Hinweises auf die Patenterteilung: **31.03.2004**
(21) Anmeldenummer: 97120705.5
(22) Anmeldetag: 26.11.1997
(51) Int. Cl.: F16F 15/131, F16F 15/18, F02N 11/04

(54) **Einrichtung zum Ausgleich von Wechselmomenten und von Schwingungen im Antriebsstrang eines Kraftfahrzeuges mit integriertem Startergenerator**
Damping means for damping of torque fluctuations and vibrations in the driveline of a motorized vehicle with integrated starter/generator
Dispositif amortisseur des fluctuations torsionelles et vibrations dans la transmission de force d'un véhicule automobile avec démarreur et générateur intégré

(30) Priorität: 08.02.1997 DE 19704786
(43) Veröffentlichungstag der Anmeldung: 12.08.1998
(73) Patentinhaber: Volkswagen Aktiengesellschaft, 38436 Wolfsburg (DE)
(72) Erfinder: Freise, Werner, Prof. Dr.-Ing., 67663 Kaiserslautern (DE); Miersch, Rainer, Dipl.-Ing., 38471 Rühen (DE); Rundkowski, Andreas, Dipl.-Ing., 38118 Braunschweig (DE); Herzig, Stefan, Dipl.-Ing., 38547 Calberlah (DE)

(56) Entgegenhaltungen:
- DE-A- 19 517 605
- FR-A- 2 459 737
- US-A- 4 458 156
- US-A- 5 126 582

## Beschreibung

Die Erfindung betrifft eine Einrichtung zum Ausgleich von Wechselmomenten und von Schwingungen im Antriebsstrang eines Kraftfahrzeuges gemäß dem Oberbegriff des Patentanspruchs 1.

Aus der DE-OS 37 20 559 ist eine Einrichtung zum Ausgleich von Wechselmomenten einer Hubkolben-Kurbelwellenmaschine bekannt, für die zum Ausgleich von durch Gas- oder Massekräfte erzeugte Wechselmomente um die Längsachse der Kurbelwelle der Brennkraftmaschine unter anderem vorgeschlagen wird, die Kurbelwelle abtriebsseitig mit Planetenträgem zu verbinden, auf denen Planetenräder angeordnet sind, deren Zähne in die Innenverzahnung eines Gehäuses greifen. Die Ausgleichsmasse für die entstehenden Wechselmomente wird durch die Planetenräder gebildet, die sich wegen ihres Antriebs durch die Kurbelwelle in eine zur Kurbelwellenumdrehung entgegengesetzten Richtung drehen, wobei ein konstantes Drehwinkelverhältnis zur Kurbelwellenbewegung besteht. Dadurch läßt sich in vorteilhafter Weise und ohne zusätzliche Ausgleichswelle der notwendige Wechselmomentenausgleich für die Brennkraftmaschine schaffen.

Aus der DE-OS 38 16 902 ist ein sogenanntes Zweimassenschwungrad bekannt geworden, daß zum Dämpfen von Schwingungen im Antriebsstrang eines Kraftfahrzeuges Verwendung findet. Dieses Zweimassenschwungrad kann in bekannter Weise zwischen der Kurbelwelle der Brennkraftmaschine und einem nachfolgenden Getriebe angeordnet werden. Dabei ist eine erste Schwungmasse des Zweimassenschwungrades fest mit der Kurbelwelle der Brennkraftmaschine verbunden, während eine zweite Schwungmasse über eine Kupplung, die vorzugsweise als Reibungskupplung ausgebildet ist, mit der Eingangswelle des Getriebes gekoppelt werden. Zwischen beiden Schwungmassen ist eine Feder-Dämpfungs-Einrichtung vorgesehen, die die beiden Schwungmassen derart miteinander verbindet, daß eine Relativverdrehung zwischen diesen beiden Schwungmassen möglich ist.

Außerdem ist aus der DE-A1 195 17 605 in Übereinstimmung mit dem Oberbegriff des Anspruchs 1 eine Einrichtung zum Ausgleich von Wechselmomenten und Schwingungen in einem Fahrzeugantriebsstrang bekannt, bei der ein Zweimassenschwungrad über ein Planetengetriebe verfügt mit dem eine dritte, gegenläufig rotierende Schwungmasse antreibbar ist.

Schließlich offenbart die EP-B1 0 103 821 eine als Startergenerator bekannte Elektromaschine, bei der ein wicklungsloser Rotor einerseits über eine Trennkupplung mit der Kurbelwelle einer Brennkraftmaschine, und andererseits mit der Eingangswelle eines Getriebes verbindbar ist. Der Elektromaschinenrotor ist von einem oder mehreren Statoren umgeben, dessen Wicklungen über eine Regeleinrichtung mit der Kraftfahrzeugbatterie oder anderen elektrischen Verbrauchern des Kraftfahrzeuges in Verbindung steht. In Abhängigkeit von der jeweiligen Betriebssituation kann die beschriebene Elektromaschine zum Anwerfen der stillstehenden Brennkraftmaschine oder als Generator zum Aufladen der Fahrzeugbatterie und zum Speisen des Bordnetzes genutzt werden.

Ausgehend von diesem Stand der Technik besteht die Aufgabe der Erfindung darin, eine Einrichtung zum Ausgleich von Wechselmomenten und von Schwingungen im Antriebsstrang in besonders kurzbauender Bauweise vorzustellen, die außerdem als Startergenerator betreibbar ist.

Die Lösung dieser Aufgabe ergibt sich aus den kennzeichnenden Merkmalen des Patentanspruchs 1. Vorteilhafte Ausgestaltungen und Weiterbildungen der Erfindung sind den Unteransprüchen entnehmbar.

Demnach wird eine Einrichtung zum Ausgleich von Wechselmomenten und von Schwingungen im Antriebsstrang eines Kraftfahrzeuges mit Startergeneratorfunktion vorgeschlagen, bei der zwischen einer ersten Schwungmasse eines Zweimassenschwungrades mit integrierter Anfahrkupplung, zweite Kupplung genannt, und einer Planetendrehausgleichseinrichtung eine weitere Schaltkupplung, zweite Kupplung genannt, angeordnet ist.

Zur Verbindung der ersten Schwungmasse mit der Kurbelwelle der Brennkraftmaschine, wobei die dritte Schwungmasse an ihrem radial äußeren Umfang als Rotor einer Elektromaschine ausgebildet ist.

Vorzugsweise weist dabei die erste der beiden Schwungmassen des Zweimassenschwungrades eine Kupplungsdruckplatte für die zweite Kupplung (Kurbelwellenkupplung) und einen Hohlradfortsatz auf, wobei die Innenverzahnung dieses Hohlradfortsatzes mit den Zähnen der Planetenräder des Planetengetriebes kämmt.

Zusätzlich kann vorgesehen sein, daß eine Betätigungseinrichtung für eine Ausrücktellerfeder der zweiten Kupplung zwischen den Planetenrädern und der mit der Abtriebswelle der Brennkraftmaschine verbundenen Kupplungsscheibe angeordnet ist.

Letztlich kann eine einen Schmierfilmnebel erzeugende Schmierölversorgungsleitung vorbanden sein, deren Austrittsöffnungen im Bereich der Lager der dritten Schwungmasse angeordnet sind.

Die vorgestellte Erfindung läßt sich anhand eines Ausführungsbeispiels verdeutlichen. In der der Beschreibung beigefügten Zeichnung ist eine erfindungsgemäße Einrichtung dargestellt, die insgesamt drei Schwungmassen 2, 5, 8 in einem gemeinsamen Gehäuse 23 umfaßt. Sie umfaßt außerdem eine erste, als Anfahrkupplung nutzbare Kupplungsvorrichtung 15, sowie eine zweite Kupplung 30 (Kurbelwellenkupplung), mit der die als Elektromaschinenrotor 31 ausgebildete dritte Schwungmasse 5 vom Antriebsstrang antriebstechnisch abtrennbar ist.

In das Einrichtungsgehäuse 23 ragt die Kurbelwelle 1 einer Brennkraftmaschine, in deren stimseitige Bohrung 32 ein kurzer Wellenabschnitt 33 eingesteckt und mittels Lager 34 koaxial zur Kurbelwelle 1 gelagert ist. Dieser Wellenabschnitt 33 trägt und bildet einen Teil der ersten Schwungmasse 2, die mit einer Federaufnahmevorrichtung 19 versehen ist, die in an sich bekannter Weise wenigstens eine Feder 6 eines tangential wirkenden Feder-Dämpfungs-Systems aufgenommen ist. Diese Feder 6 stützt sich an der ersten Schwungmasse 2 ab und ist mit einem Stegblech 7 verbunden, das eine elastische Verbindung zur zweiten Schwungmasse 8 herstellt. Diese zweite Schwungmasse 8 enthält die Anfahrkupplung 15 und ist über ein Lager 20 auf dem Wellenabschnitt 33 gelagert.

Bestandteile der Anfahrkupplung 15 sind die Tellerfeder 24, der Kupplungsdruckkörper 21 und eine Kupplungsscheibe 22, die über einen Flansch 11 mit einer nicht dargestellten Getriebeeingangswelle verbindbar ist.

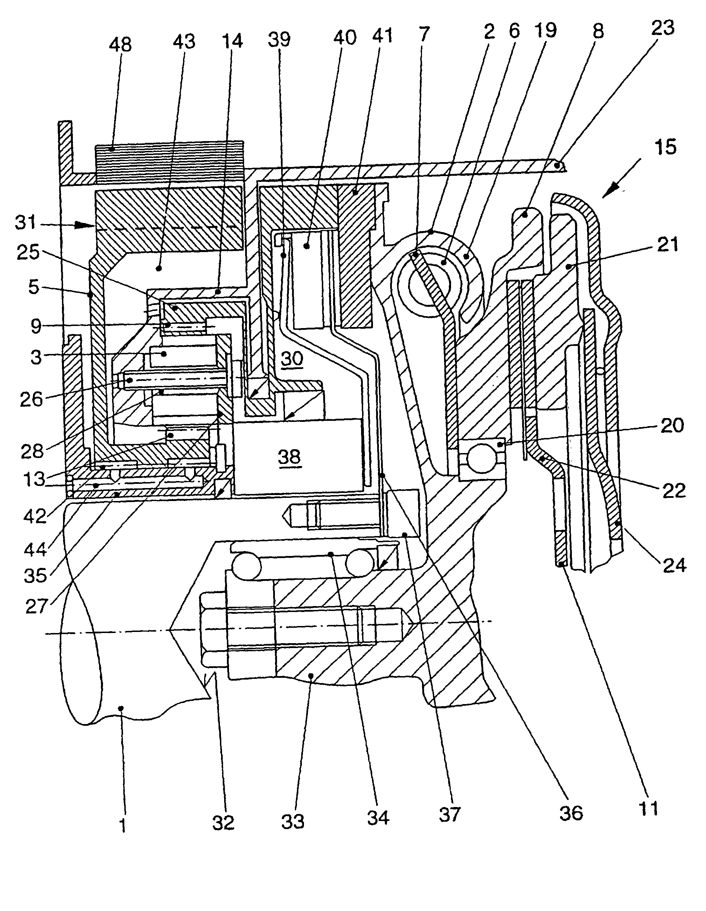

Kurbelwellenseitig ist an der ersten Schwungmasse 2 ein mit einer Innenverzahnung 9 versehenes Hohlrad 25 ausgebildet, das mit den Zähnen von Planetenrädern 3 kämmt, die mittels ihrer Planetenradachse 26 über Planetenlager 28 in einem gehäusefest angelenkten Steg 14 und einem Lagerbauteil 27 gelagert sind. Die Verzahnung der Planetenräder 3 greift ihrerseits in den Sonnenrad-Zahnkranz 13 der dritten Schwungmasse 5 ein, die sich radial nach außen von der Kurbelwelle 1 weg erstreckt. Sie ist auf einem Gehäusesteg 35 gelagert und an ihrem Außenumfang als Rotor 31 einer Elektromaschine ausgebildet. Wie der Zeichnung deutlich entnehmbar ist, sind am oder im Gehäuse 23 dieser Einrichtung im Bereich radial außerhalb des Rotors 31 die Statoren 48 der Elektromaschine angeordnet.

Durch den Antrieb der dritten Schwungmasse 5 durch die erste Schwungmasse 2 über die Planetenräder 3 erfährt diese dritte Schwungmasse 5 einen Drehsinn, der entgegengesetzt zu dem der Kurbelwelle 1 ist. Auf diese Weise lassen sich in bekannter Weise die Drehungleichförmigkeiten der Kurbelwelle relativ zum Motorgehäuse hervorragend und besonders platzsparend kompensieren.

Die Elektromaschine 31, 48 kann sowohl als Motor zum Antrieb der Schwungmasse 5 (und über den Planetentrieb auch der Schwungmassen 2 und 8) genutzt werden. Durch schnelles Schließen der Kurbelwellen-Kupplung 30 läßt sich die Brennkraftmaschine aus der kinetischen Energie der Schwungräder starten (Starterfunktion). Bei hinreichender Leistung der Elektromaschine ist durch Schließen der Anfahrkupplung auch ein Elektrofahrbetrieb möglich.

Bei laufender Brennkraftmaschine ist die Kurbelwellenkupplung 30 stets geschlossen, die Schwungmassen laufen und die Elektromaschine kann dann als Generator zur Batterieladung oder Bordnetzversorgung dienen. Als Generator kann sie auch bei abgestellter Brennkraftmaschine und geöffneter Kurbelwellenkupplung 30 wirken, um - bei ebenfalls offener Kupplung 15 - kinetische Energie der Schwungräder oder - bei geschlossener Kupplung 15 - kinetische Energie des ganzen Fahrzeugs bzw. Bremsarbeit zu nutzen.

Die Betätigung der Kupplung 30 wird von einer hier nur als Funktionsblock dargestellten zentralen Ausrückeinheit 38 vorgenommen, die vorzugsweise druckmittelbetrieben und mit einem nicht dargestellten Steuergerät verbunden ist. Dabei wirkt die Ausrückeinheit 38 auf die Tellerfeder 39, so daß ein Kupplungsdruckkörper 39 entlastet und damit die Kupplung 30 geöffnet wird.

Durch den äußerst kompakten Aufbau der erfindungsgemäßen Einrichtung läßt sich diese vorteilhaft insbesondere bei kleinen und kraftstoffsparenden Brennkraftmaschinen, etwa dreizylindrigen Hubkolben-Brennkraftmaschinen mit Vorteil einsetzen.

## Patentansprüche

1. Einrichtung zum Ausgleich von Wechselmomenten und von Schwingungen im Antriebsstrang eines Kraftfahrzeuges, mit einer ersten Schwungmasse (2) zur Verbindung mit der Kurbelwelle (1) einer Brennkraftmaschine,
mit einer zweiten Schwungmasse (8), die über eine Anfahrkupplung, zweite Kupplung (15) genannt, mit der Eingangswelle eines Getriebes verbindbar ist, mit einer Feder-Dämpfungs-Einrichtung (6, 7), die die beiden Schwungmassen (2, 8) derart mit einander verbindet, daß eine Relativverdrehung zwischen ihnen möglich ist, sowie mit einer dritten Schwungmasse (5), die von der ersten Schwungmasse (2) über ein Planetengetriebe angetrieben wird, **dadurch gekennzeichnet, daß** zwischen dem Planetengetriebe (3, 13, 25) und der ersten Schwungmasse (2) eine Schaltkupplung (30), erste Kupplung genannt, zur Verbindung der ersten Schwungmasse (2) mit der Kurbelwelle (1) angeordnet ist, und daß die dritte Schwungmasse (5) an ihrem radial äußeren Umfang als Rotor (31) einer Elektromaschine ausgebildet ist.

2. Einrichtung nach Anspruch 1, **dadurch gekennzeichnet, daß** an der ersten Schwungmasse (2) ein Hohlrad (25) ausgebildet ist, das eine Innenverzahnung (9) aufweist, die in die Außenverzahnung von gehäusefest gelagerten Planetenrädem (3) greift.

3. Einrichtung nach den Ansprüchen 1 oder 2, **dadurch gekennzeichnet, daß** die Zähne der Planetenräder (3) in einen Zahnkranz (13) der dritten Schwungmasse (5) greifen, die als Sonnenrad (5) ausgebildet ist.

4. Einrichtung nach Anspruch 3, **dadurch gekennzeichnet, daß** die Planetenräder (3) an einem Gehäusesteg (14) gelagert sind.

5. Einrichtung nach Anspruch 1 oder 2, **dadurch gekennzeichnet, daß** die erste Schwungmasse (2) einen als Kupplungsdruckplatte ausgebildeten Abschnitt (41) aufweist.

6. Einrichtung nach Anspruch 1, **dadurch gekennzeichnet, daß** die zweite Kupplung (15) im Bereich der zweiten Schwungmasse (8) als Anfahrkupplung dient.

7. Einrichtung nach den Ansprüchen 1, 2 und 5, **dadurch gekennzeichnet, daß** an der ersten Schwungmasse (2) eine Vorrichtung (19) zur Aufnahme von wenigstens einer Feder (6) ausgebildet ist, die die erste Schwungmasse (2) mit der zweiten Schwungmasse (8) tangential-elastisch verbindet.

8. Einrichtung nach Anspruch 7, **dadurch gekennzeichnet, daß** die Feder (6) mit einem Stegblech (7) verbunden ist, das an der zweiten Schwungmasse (8) befestigt ist.

9. Einrichtung nach einem oder mehreren der Ansprüche 1 sowie 6 bis 8, daß die zweite Schwungmasse (8) als Kupplungsdruckplatte ausgebildet ist und sich über ein Lager (20) auf einem Wellenabschnitt (33) abstützt,

10. Einrichtung nach einem oder mehreren der Ansprüche 1 sowie 6 bis 9, **dadurch gekennzeichnet, daß** zwischen der Kupplungsdruckplatte der zweiten Schwungmasse (8) und einem Kupplungsdruckkörper (21) eine Kupplungsscheibe (22) angeordnet ist, die über einen Flansch (11) mit einer Getriebeeingangswelle verbindbar ist.

11. Einrichtung nach einem oder mehreren der Ansprüche 1 bis 10, **dadurch gekennzeichnet, daß** die Kupplungsscheibe (36) der ersten Kupplung (30) mit der Kurbelwelle (1) verbunden ist.

12. Einrichtung nach einem oder mehreren der Ansprüche 1 bis 11, **dadurch gekennzeichnet, daß** eine Betätigungseinrichtung (38) für die erste Kupplung (30) zwischen den Planetenrädern (3) und der Kupplungsscheibe (36) der ersten Kupplung (30) angeordnet ist.

13. Einrichtung nach einem oder mehreren der Ansprüche 1 bis 12, **dadurch gekennzeichnet, daß** die erste Schwungmasse (2) mit einem Wellenabschnitt (33) verbunden ist, der koaxial in einer Bohrung (32) der Kurbelwelle (1) gelagert ist.

14. Einrichtung nach einem oder mehreren der Ansprüche 1 bis 13, **dadurch gekennzeichnet, daß** die dritte Schwungmasse (5) auf einem Gehäusesteg (35) gelagert ist.

15. Einrichtung nach Anspruch 14, **dadurch gekennzeichnet, daß** eine Schmiermittelversorgungsleitung (44) im Bereich der Lager (42) der Schwungmasse (5) in den Planetengetrieberaum (43) mündet.

16. Antriebsstrang mit einer Hubkolben-Brennkraftmaschine, einem Getriebe und einer Einrichtung zum Wechselmomenten- und Drehschwingungsausgleich, **gekennzeichnet durch** eine Einrichtung gemäß einem oder mehreren der Ansprüche 1 bis 15.

## Claims

1. Device for the compensation of alternating torques and of vibrations in the drive train of a motor vehicle, with a first flywheel mass (2) for connection to the crankshaft (1) of an internal combustion engine, with a second flywheel mass (8), which can be connected to the input shaft of a transmission via a starting clutch, called the second clutch (15), with a spring damping device (6, 7) which connects the two flywheel masses (2, 8) to one another in such a way that relative rotation between them is possible, and with a third flywheel mass (5) which is driven by the first flywheel mass (2) via a planetary transmission, **characterized in that** a switching clutch (30), called the first clutch, for connecting the first flywheel mass (2) to the crankshaft (1) is arranged between the planetary transmission (3, 13, 25) and the first flywheel mass (2), and **in that** the third flywheel mass (5) is designed, on its radially outer circumference, as a rotor (31) of an electric machine.

2. Device according to Claim 1, **characterized in that** the first flywheel mass (2) has designed on it a ring gear (25) having an internal toothing (9) which engages into the external toothing of planet wheels (3) mounted fixedly relative to the housing.

3. Device according to Claims 1 or 2, **characterized in that** the teeth of the planet wheels (3) engage into a rim gear (13) of the third flywheel mass (5) which is designed as a sun wheel (5).

4. Device according to Claim 3, **characterized in that** the planet wheels (3) are mounted on a housing web (14).

5. Device according to Claim 1 or 2, **characterized in that** the first flywheel mass (2) has a portion (41) designed as a clutch thrust plate.

6. Device according to Claim 1, **characterized in that** the second clutch (15) in the region of the second flywheel mass (8) serves as the starting clutch.

7. Device according to Claims 1, 2 and 5, **characterized in that** a device (19) for receiving at least one spring (6) is designed on the first flywheel mass (2), said device connecting the first flywheel mass (2) to the second flywheel mass (8) in a tangentially elastic manner.

8. Device according to Claim 7, **characterized in that** the spring (6) is connected to a web plate (7) which is fastened to the second flywheel mass (8).

9. Device according to one or more of Claims 1 and 6 to 8, **characterized in that** the second flywheel mass (8) is designed as a clutch thrust plate and is supported on a shaft portion (22) via a bearing (20).

10. Device according to one or more of Claims 1 and 6 to 9, **characterized in that** there is arranged between the clutch thrust plate of the second flywheel mass (8) and a clutch thrust body (21) a clutch disc (22) which can be connected to a transmission input shaft via a flange (11).

11. Device according to one or more of Claims 1 to 10, **characterized in that** the clutch disc (36) of the first clutch (30) is connected to the crankshaft (1).

12. Device according to one or more of Claims 1 to 11, **characterized in that** an actuating device (38) for the first clutch (30) is arranged between the planet wheels (3) and the clutch disc (36) of the first clutch (30).

13. Device according to one or more of Claims 1 to 12, **characterized in that** the first flywheel mass (2) is connected to a shaft portion (33) which is mounted coaxially in a bore (32) of the crankshaft (1).

14. Device according to one or more of Claims 1 to 13, **characterized in that** the third flywheel mass (5) is mounted on a housing web (35).

15. Device according to Claim 14, **characterized in that** a lubricant supply line (44) opens into the planetary transmission space (43) in the region of the bearing (42) of the flywheel mass (5).

16. Drive train with a reciprocating internal combustion engine, with a transmission and with a device for the compensation of alternating torques and of tortional vibrations, **characterized by** a device according to one or more of Claims 1 to 15.

## Revendications

1. Dispositif destiné à réduire les variations périodiques de couple et à équilibrer les vibrations dans la partie motrice d'un véhicule automobile avec une première masse d'équilibrage (2) destinée à être reliée au vilebrequin (1) d'un moteur à combustion interne,
avec une deuxième masse d'équilibrage (8) qui, par l'intermédiaire d'un coupleur de démarrage nommé second coupleur (15), est adaptée pour être reliée à l'arbre d'entrée d'une boîte, avec un dispositif amortisseur à ressorts (6, 7) qui relie les deux masses d'équilibrage (2, 8) de manière à leur permettre de se déplacer angulairement l'une par rapport à l'autre, ainsi qu'avec une troisième masse d'équilibrage (5) qui est entraînée par la première masse d'équilibrage (2) par l'intermédiaire d'un engrenage planétaire,
**caractérisé en ce**
**qu'**entre l'engrenage planétaire (3, 13, 25) et la première masse d'équilibrage (2) est disposé un accouplement débrayable (30) nommé premier coupleur destiné à relier la première masse d'équilibrage (2) au vilebrequin (1) et que la troisième masse d'équilibrage (5) est conformée, sur son pourtour extérieur radial, sous forme de rotor (31) d'un moteur électrique.

2. Dispositif selon la revendication 1, **caractérisé en ce que**, sur la première masse d'équilibrage (2), est formée une couronne (25) comportant une denture intérieure (9) qui vient se mettre en prise dans la denture extérieure de satellites (3) solidaires du boîtier.

3. Dispositif selon la revendication 1 ou 2, **caractérisé en ce que** les dents des satellites (3) s'engagent dans une couronne dentée (13) de la troisième masse d'équilibrage (5) conformée en forme de pignon solaire (5).

4. Dispositif selon la revendication 3, **caractérisé en ce que** les satellites (3) sont en appui sur un méplat (14) du boîtier.

5. Dispositif selon la revendication 1 ou 2, **caractérisé en ce que** la première masse d'équilibrage (2) comporte une partie conformée en forme de plateau de pression d'embrayage (41).

6. Dispositif selon la revendication 1, **caractérisé en ce que** le second coupleur (15) sert de coupleur de démarrage au niveau de la deuxième masse d'équilibrage (8).

7. Dispositif selon les revendications 1, 2 et 5, **caractérisé en ce qu'**est formé, sur la première masse d'équilibrage (2), un dispositif (19) destiné à recevoir au moins un ressort (6) qui relie élastiquement la première masse d'équilibrage (2) à la deuxième masse d'équilibrage (8) selon une direction tangentielle.

8. Dispositif selon la revendication 7, **caractérisé en ce que** le ressort (6) est relié à une tôle (7) formant talon qui est assujettie à la deuxième masse d'équilibrage (8).

9. Dispositif selon une ou plusieurs des revendications 1 ainsi que 6 à 8, **caractérisé en ce que** la deuxième masse d'équilibrage (8) est conformée en forme de plateau de pression d'embrayage et qu'elle est en appui sur une partie d'arbre (33) sur laquelle elle est supportée par un palier (20).

10. Dispositif selon une ou plusieurs des revendications 1 ainsi que 6 à 9, **caractérisé en ce qu'**entre le plateau de pression d'embrayage de la deuxième masse d'équilibrage (8) et un corps de pression d'embrayage (21) est disposé un disque d'embrayage (22) susceptible d'être relié à un arbre d'entrée de boîte par l'intermédiaire d'une bride (11).

11. Dispositif selon une ou plusieurs des revendications 1 à 10, **caractérisé en ce que** le disque d'embrayage (36) du premier coupleur (30) est relié au vilebrequin (1).

12. Dispositif selon une ou plusieurs des revendications 1 à 11, **caractérisé en ce qu'**un dispositif d'actionnement (38) du premier coupleur (30) est disposé entre les satellites (3) et le disque d'embrayage (36) du premier coupleur (30).

13. Dispositif selon une ou plusieurs des revendications 1 à 12, **caractérisé en ce que** la première masse d'équilibrage (2) est reliée à une partie d'arbre (33) en appui coaxial dans un alésage (32) du vilebrequin (1).

14. Dispositif selon une ou plusieurs des revendications 1 à 13, **caractérisé en ce que** la troisième masse d'équilibrage (5) est en appui sur un méplat (35) du boîtier.

15. Dispositif selon la revendication 14, **caractérisé en ce qu'**un tuyau d'alimentation en huile moteur (44) débouche dans l'enceinte de l'engrenage planétaire (43) à la hauteur des paliers (42) de la masse d'équilibrage (5).

16. Partie motrice avec un moteur alternatif à combustion interne, une boîte et un dispositif destiné à réduire les variations périodiques de couple et à équilibrer les vibrations de rotation, **caractérisée par** un dispositif selon une ou plusieurs des revendications 1 à 15.
